# EUROPÄISCHE PATENTSCHRIFT

(11) **EP 3 237 144 B1**
(45) Veröffentlichungstag und Bekanntmachung des Hinweises auf die Patenterteilung: **01.05.2019**
(21) Anmeldenummer: 16711183.0
(22) Anmeldetag: 14.03.2016
(51) Int. Cl.: B23K 35/30, B23K 1/00, B23K 35/02, B32B 15/01, C21D 9/50, C22C 19/00, C22C 19/03, B23P 6/00, B22F 7/06, C22C 1/04, C22C 19/05

(54) **NI-MN-CR-AL-TI-LEGIERUNG, PULVER, VERFAHREN UND BAUTEIL**
NI-MN-CR-AL-TI-ALLOY, POWDER, PROCESS AND PART
NI-MN-CR-AL-TI-ALLIAGE, POUDRE, PROCÉDURE ET ÉLÉMENT

(30) Priorität: 16.03.2015 DE 102015204726
(43) Veröffentlichungstag der Anmeldung: 01.11.2017
(73) Patentinhaber: Siemens Aktiengesellschaft, 80333 München (DE)
(72) Erfinder: LAUX, Britta, 14059 Berlin (DE)
(86) Internationale Anmeldenummer: PCT/EP2016/055395
(87) Internationale Veröffentlichungsnummer: WO 2016/146560

(56) Entgegenhaltungen:
- WO-A1-2006/067189
- WO-A1-2014/108293
- US-A1- 2013 302 647
- BRITTA LAUX ET AL: "Mechanical Properties of New Ni-Mn-Based Braze Alloys for the Fast Epitaxial Braze Repair of Single-Crystalline Ni-Base Superalloys", ADVANCED MATERIALS RESEARCH, Bd. 278, 4. Juli 2011 (2011-07-04), Seiten 479-484, XP055280808, DOI: 10.4028/www.scientific.net/AMR.278.479

## Beschreibung

Die Erfindung betrifft eine Legierung, die insbesondere zum Löten eingesetzt wird, auf der Basis Nickel, Mangan, Chrom, Aluminium und Titan, ein Pulver bzw. Rohmaterial, ein Verfahren sowie ein Bauteil.

Zum Reparaturlöten wie Auftragslöten und Risslöten von Hochtemperaturturbinenkomponenten werden standardmäßig borhaltige Lotsysteme eingesetzt. Dafür werden in der Regel entweder Lotpasten oder vorgesinterte Lotbleche verwendet, die aus einer Mischung aus einem borhaltigem Lotpulver und einem Grundwerkstoffpulver bestehen. Das Grundwerkstoffpulver wird zugemischt, um als Diffusionssenke für Bor (B) zu dienen. Im Rahmen einer zusätzlichen Wärmebehandlung, die nach dem eigentlichen Löten durchgeführt wird, diffundiert das Bor in den Grundwerkstoff der Komponente und gleichzeitig in das beigemischte Grundwerkstoffpulver.

Problematisch an diesem Prozess sind die langen Haltezeiten, die für eine ausreichende Diffusion notwendig sind. Wird diese Diffusionszeit nicht eingehalten, bilden sich aufgrund der extrem geringen Löslichkeit des Bor (B) in Nickel (Ni) Boride aus, die die mechanischen Eigenschaften der Lotverbindung deutlich verschlechtern. Weiterhin liegen erste Erkenntnisse vor, dass es bei borhaltigen Loten langfristig zu unerwünschten Wechselwirkungen mit einer MCrAlY-Beschichtung kommt.

Es ist bekannt, dass mit den borhaltigen Lote gute mechanische Kennwerte erzielt werden können, sofern entsprechend lange Wärmebehandlungszyklen in Kauf genommen werden. Diese Kosten werden momentan im Rahmen der Komponentenreparatur akzeptiert. Die Veröffentlichung "BRITTA LAUX ET AL: "Mechanical Properties of New Ni-Mn-Based Braze Alloys for the Fast Epitaxial Braze Repair of Single-Crystalline Ni-Base Superalloys",ADVANCED MATERIALS RESEARCH, Bd. 278, 4. Juli 2011 (2011-07-04), Seiten 479-484" offenbart eine Legierung zum Reparaturlöten von Turbinenkomponenten mit einer chemischen Zusammensetzung, welche aus Mn, Cr, Al, Ti und Ni besteht. Es ist daher Aufgabe der Erfindung oben genannte Probleme zu lösen.

Die Aufgabe wird gelöst durch eine Legierung gemäß Anspruch 1, ein Pulver oder Rohmaterial gemäß Anspruch 8, ein Verfahren gemäß Anspruch 10 und ein Bauteil nach Anspruch 13 und 14.

In den jeweiligen Unteransprüchen sind weitere vorteilhafte Maßnahmen aufgelistet, die beliebig miteinander kombiniert werden können, um weitere Vorteile zu erzielen.

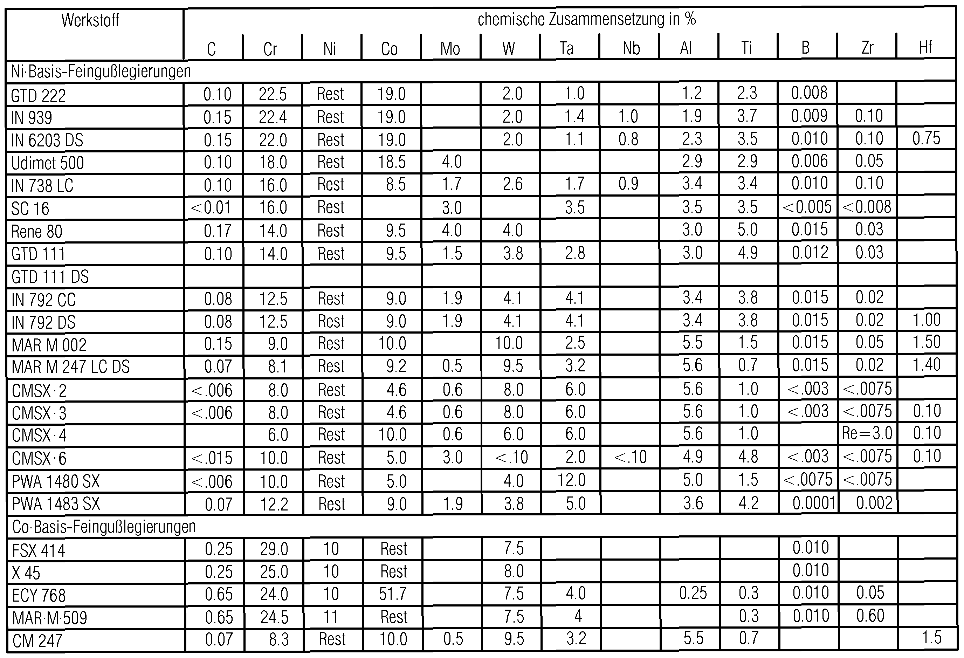

Es zeigt die Figur eine Liste von kobalt- oder nickelbasierten Superlegierungen.

Die Beschreibung stellt nur Ausführungsbeispiele der Erfindung dar.

Es wird vorgeschlagen, die borhaltigen Lote durch manganhaltige Systeme zu ersetzen, die vorzugsweise auf folgendem Grundsystem basieren: Ni-Mn-Cr-Al-Ti.

Dabei fungiert Mangan (Mn) als Hauptschmelzpunkterniedriger, Titan (Ti) als zusätzlicher Schmelzpunkterniedriger und zur Stabilisierung von γ', Aluminium (Al) als γ'-Bildner und Chrom (Cr) als Mischkristallhärter und zur Verbesserung der Oxidations-/Korrosionsbeständigkeit.

Eine bevorzugte Zusammensetzung ist Ni, 12-15Mn, 5-8Cr, 2-4Al, 2-4Ti (in Gew.-%).

Das Lot ist bzgl. der Zusammensetzung und der vorhandenen Phasen sehr einfach aufgebaut. Der Schmelzbereich stellt sich im Falle der Zusammensetzung Ni-15Mn-8Cr-3Al-3Ti zwischen 1453K und 1508K ein und kann durch eine Anpassung des Mangan-Anteils gezielt verschoben werden. Zwischen der Solidustemperatur und der γ'-Solvustemperatur liegt ein hinreichend großes Fenster zum Lösungsglühen vor, die im Falle der Reparatur eines Bauteils aufweisenden Rene 80 mit dieser Legierung im Rahmen der ersten beiden Auslagerungsstufen des Grundwerkstoffes erfolgen kann.

Weitere Grundwerkstoffe sind in der Figur aufgelistet.

Die γ'-Solvustemperatur der Legierung kann ggf. noch über eine Variation des Titan- und Aluminium-Gehaltes variiert werden.

Das Lot kann vorzugsweise in Pulverform mit oder ohne zusätzliches Grundwerkstoffpulver insbesondere eines Substrats eines zu reparierenden Bauteils appliziert werden. Da keine Bordiffusion erforderlich ist, entfällt die gesamte Lot-Wärmebehandlung nach dem eigentlichen Löten. Im Falle von Rene 80 könnte das Löten direkt in eine notwendige Bauteilwärmebehandlung des Rene 80 integriert werden (1477K, 2h).

Sofern die Bauteile mehrfach repariert werden sollen, kann ein System mit einem geringeren Mn-Anteil verwendet werden (ca. 12%), so dass oberhalb der Lösungsglühtemperatur gelötet werden kann (bei 1483K-1493K). Das eigentliche Löten könnte in 1h erfolgen; danach sind keine weiteren Wärmebehandlungsstufen mehr erforderlich.

Sofern höherfeste Werkstoffe wie z.B. Alloy 247 gelötet werden sollen, kann die Schmelztemperatur und die γ'- Solvustemperatur angepasst werden.

Da Mangan (Mn) eine sehr gute Löslichkeit in Nickel aufweist, muss Mangan (Mn) als Schmelzpunkterniedriger nicht herausdiffundiert werden, um eine Sprödphasenbildung zu vermeiden. Ein erneutes Lösungsglühen von bereits gelöteten Bauteilen ist möglich, sofern ein hinreichend geringer Mangan-Anteil in den Loten eingestellt wird, so dass die Wiederanschmelztemperatur hoch genug ist.

Im Vergleich zu borhaltigen Systemen ergeben sich folgende Vorteile:
- Verkürzung der Prozesszeiten, da keine Diffusion notwendig ist,
- keine Gefahr der Sprödphasenbildung, da Mangan (Mn) und Nickel (Ni) sehr gut kompatibel sind,
- mechanische Eigenschaften der Mangan-Loten wurden bereits untersucht und sind vergleichbar mit den borhaltigen Loten,
- vereinfachte Lotapplikation beim Risslöten,
- sehr einfaches Grundsystem, das gezielt auf verschiedene Grundwerkstoffe zugeschnitten werden kann.

## Patentansprüche

1. Legierung, die als Legierungselemente aufweist in Gew.-%:
10% bis 16% Mangan (Mn),
3% bis 10% Chrom (Cr),
1% bis 6% Aluminium (Al),
1% bis 6% Titan (Ti),
Rest Nickel.

2. Legierung nach Anspruch 1,
die 3Gew.-% Aluminium (Al) aufweist.

3. Legierung nach einem oder beiden der Ansprüche 1 oder 2, die 3Gew.-% Titan (Ti) aufweist.

4. Legierung nach einem oder mehreren der Ansprüche 1, 2 oder 3,
die 15Gew.-% Mangan aufweist.

5. Legierung nach einem oder mehreren der Ansprüche 1, 2, 3 oder 4,
die 8Gew.-% Chrom aufweist.

6. Legierung nach einem oder mehreren der Ansprüche 1, 2, 3, 4 oder 5,
bei dem die Legierung aus Nickel, Mangan, Chrom, Aluminium und Titan besteht.

7. Legierung nach Anspruch 1,
die kein Bor (B)
und kein Germanium (Ge)
und kein Gallium (Ga)
und kein Silizium (Si)
aufweist.

8. Pulver oder Rohmaterial,
aufweisend eine Legierung nach Anspruch 1, 2, 3, 4, 5, 6 oder 7.

9. Pulver nach Anspruch 8,
das eine physikalische Mischung aus einem Pulver oder aus einer Legierung nach einem oder mehreren der Ansprüche 1, 2, 3, 4, 5, 6 oder 7 und einem manganfreien Nickelbasispulver aufweist.

10. Verfahren zum Löten eines nickelbasierten Bauteils, bei dem eine Legierung gemäß einem oder mehreren der Ansprüche 1, 2, 3, 4, 5, 6 oder 7
oder ein Pulver oder Rohmaterial gemäß Anspruch 8 oder 9 verwendet wird.

11. Verfahren nach Anspruch 10,
bei dem die Löttemperatur zwischen 1453K und 1508K liegt.

12. Verfahren nach Anspruch 10 oder 11,
bei dem der Lötvorgang in einer für den Einsatz eines Bauteils notwendigen Wärmebehandlung des Bauteils integriert ist.

13. Bauteil,
aufweisend ein nickel- oder kobaltbasiertes Substrat, das zumindest und höchstens teilweise einen Aufbaubereich und/oder eine reparierte Stelle mit einer Legierung gemäß einem oder mehreren der Ansprüche 1, 2, 3, 4, 5, 6 oder 7 aufweist.

14. Bauteil nach Anspruch 13,
aufweisend Alloy 247.

## Claims

1. Alloy which comprises, as alloy elements, the following in % by weight:
from 10% to 16% of manganese (Mn), from 3% to 10% of chromium (Cr), from 1% to 6% of aluminum (Al), from 1% to 6% of titanium (Ti), nickel as balance.

2. Alloy according to Claim 1 comprising 3% by weight of aluminum (Al).

3. Alloy according to one or both of Claims 1 and 2 comprising 3% by weight of titanium (Ti).

4. Alloy according to one or more of Claims 1, 2 and 3 comprising 15% by weight of manganese.

5. Alloy according to one or more of Claims 1, 2, 3 and 4 comprising 8% by weight of chromium.

6. Alloy according to one or more of Claims 1, 2, 3, 4 and 5, wherein the alloy consists of nickel, manganese, chromium, aluminum and titanium.

7. Alloy according to Claim 1
which comprises no boron (B)
and no germanium (Ge)
and no gallium (Ga)
and no silicon (Si).

8. Powder or raw material comprising an alloy according to Claim 1, 2, 3, 4, 5, 6 or 7.

9. Powder according to Claim 8 which comprises a physical mixture of a powder or of an alloy according to one or more of Claims 1, 2, 3, 4, 5, 6 and 7 and a manganesefree nickel-based powder.

10. Method of soldering a nickel-based component, wherein an alloy according to one or more of Claims 1, 2, 3, 4, 5, 6 and 7 or a powder or raw material according to Claim 8 or 9 is used.

11. Method according to Claim 10, wherein the soldering temperature is in the range from 1453K to 1508K.

12. Method according to Claim 10 or 11, wherein the soldering operation is integrated into a heat treatment of a component which is necessary for use of the component.

13. Component comprising a nickel- or cobalt-based substrate, which has at least and at most partly a buildup region and/or a repaired place comprising an alloy according to one or more of Claims 1, 2, 3, 4, 5, 6 and 7.

14. Component according to Claim 13 comprising Alloy 247.

## Revendications

1. Alliage,
qui a comme éléments d'alliage en pourcentage en poids :
de 10% à 16% de manganèse (Mn),
de 3% à 10% de chrome (Cr),
de 1% à 6% d'aluminium (Al),
de 1% à 6% de titane (Ti),
le reste étant du nickel.

2. Alliage suivant la revendication 1,
qui à 3% en poids d'aluminium (Al).

3. Alliage suivant l'une ou les deux revendications 1 ou 2, qui a 3% en poids de titane (Ti).

4. Alliage suivant l'une ou plusieurs des revendications 1, 2 ou 3,
qui a 15% en poids de manganèse.

5. Alliage suivant l'une ou plusieurs des revendications 1, 2, 3 ou 4,
qui a 8% en poids de chrome.

6. Alliage suivant l'une ou plusieurs des revendications 1, 2, 3, 4 ou 5,
dans lequel l'alliage est constitué de nickel, de manganèse, de chrome, d'aluminium et de titane.

7. Alliage suivant la revendication 1,
qui n'a pas de bore (B)
et pas de germanium (Ge)
et pas de gallium (Ga)
et pas de silicium (Si).

8. Poudre ou matière première,
comportant un alliage suivant la revendication 1, 2, 3, 4, 5, 6 ou 7.

9. Poudre suivant la revendication 8,
qui a un mélange physique composé d'une poudre ou d'un alliage suivant l'une ou plusieurs des revendications 1, 2, 3, 4, 5, 6 ou 7 et d'une poudre à base de nickel exempte de manganèse.

10. Procédé de brasage d'une pièce à base de nickel,
dans lequel on utilise un alliage suivant l'une ou plusieurs des revendications 1, 2, 3, 4, 5, 6 ou 7
ou une poudre ou une matière première suivant la revendication 8 ou 9.

11. Procédé suivant la revendication 10,
la température de brasage est comprise entre 1 453 K et 1 508 K.

12. Procédé suivant la revendication 10 ou 11,
dans lequel l'opération de brasage est intégrée à un traitement thermique d'une pièce nécessaire à l'utilisation de la pièce.

13. Pièce,
ayant un substrat à base de nickel ou de cobalt, qui a au moins et au plus, en partie, une région de montage et/ou un endroit réparé ayant un alliage suivant l'une ou plusieurs des revendications 1, 2, 3, 4, 5, 6 ou 7.

14. Pièce suivant la revendication 13,
comportant de l'alloy 247.
